# FASCICULE DE BREVET EUROPEEN

(11) **EP 2 280 463 B1**
(45) Date de publication et mention de la délivrance du brevet: **23.08.2017**
(21) Numéro de dépôt: 10290422.4
(22) Date de dépôt: 27.07.2010
(51) Int. Cl.: H02G 3/06

(54) **Système de verrouillage pour chemins de câbles et chemins de câbles munis d'un tel système**
Verriegelungssystem für Kabelkanäle, und mit diesem System ausgestattete Kabelkanäle
Locking system for cable raceways and cable raceways provided with such a system

(30) Priorité: 27.07.2009 FR 0903678
(43) Date de publication de la demande: 02.02.2011
(73) Titulaire: Niedax France, 62400 Béthune (FR)
(72) Inventeur: Delforge, David, 67210 Obernai (FR)
(74) Mandataire: Demulsant, Xavier

(56) Documents cités:
- EP-A1- 1 257 030
- DE-A1- 19 841 643
- DE-U1-202008 009 852
- FR-A1- 2 721 376
- FR-A1- 2 848 350

## Description

L'invention a trait à l'assemblage des chemins de câbles, et plus particulièrement au verrouillage de tronçons de chemin de câbles dits télescopiques.

Les chemins de câbles sont des structures permettant de supporter, aussi bien dans une configuration verticale qu'horizontale, notamment des câbles électriques, des câbles téléphoniques, des câbles de fibres optiques, des câbles de réseau informatique ou encore des canalisations.

Un chemin de câbles comprend conventionnellement un fond et deux ailes latérales, la section formant en général un U ou un C, bien qu'il existe d'autres formes, par exemple en G comme cela est présenté dans le document WO 2007 068 813.

Eventuellement, les chemins de câbles sont équipés d'accessoires, par exemple de colliers enserrant les câbles et les maintenant contre le chemin de câbles, ou encore de séparateurs réalisant dans un même chemin plusieurs compartiments, permettant la séparation physique de câbles de nature différente. Un couvercle est parfois fixé de manière à fermer le chemin de câbles, conférant une certaine protection des câbles par rapport à des corps étrangers, par exemple la poussière.

Les chemins de câbles sont en outre fixés par exemple sur des bras de console, s'étendant en porte-à-faux à partir d'un pendard ou d'une paroi.

Les chemins de câbles sont réalisés de manières variées. Principalement, les chemins de câbles sont réalisés à partir de tablettes métalliques pleines pliées, de tablettes comportant des ouvertures longitudinales régulièrement réparties ou encore à partir de fils organisés en treillis. Un traitement, tel que la pose d'un revêtement, le zingage ou encore la galvanisation à chaud, peut être mis en oeuvre sur les chemins de câbles afin de les rendre plus résistants à l'atmosphère, éventuellement agressive, dans laquelle ils sont placés.

Les chemins de câbles se présentent conventionnellement en forme de tronçons, aboutés les uns aux autres. Les tronçons peuvent être rectilignes aussi bien que coudés. La longueur conventionnelle pour de tels tronçons est d'environ trois mètres. Ainsi, l'assemblage de plusieurs tronçons permet de former un chemin de câbles adapté aux parcours des câbles.

L'assemblage est réalisé de différentes manières, par exemple au moyen d'une éclisse. Une éclisse se présente généralement sous la forme d'une pièce allongée, fixée à cheval sur deux parties extrêmes de deux tronçons de chemins de câbles, par exemple sur les ailes ou sur le fond des tronçons.

On pourra citer comme méthodes de fixation de l'éclisse le boulonnage, tel que décrit dans le document EP 0 617 493 ou encore le soudage. Toutefois, le boulonnage impose d'utiliser de nombreuses pièces supplémentaires de visserie, tandis que le soudage demande de la part d'un opérateur de mettre en oeuvre des compétences et un appareillage propres au domaine des soudures, et risque par ailleurs de détériorer le revêtement des chemins de câbles.

Il est également connu de monter l'éclisse par forçage au moyen de pattes déformables, comme le montre le document FR 2 751 723, ou par encliquetage, dont un exemple est présenté dans le document FR 2 833 420, ces deux méthodes présentant l'avantage de ne pas employer de visserie, mais pouvant entraîner une usure en fatigue prématurée.

Le document EP 0 695 009 décrit une autre méthode de montage d'une éclisse dans laquelle l'éclisse comprend des pattes insérées dans les ouvertures des tronçons de chemins de câbles en tôle pliée, les pattes étant déformées afin de verrouiller l'ensemble. La déformation des pattes est toutefois un phénomène irréversible, ou réversible un nombre limité de fois, et nécessite l'emploi d'un outil adapté ainsi qu'une certaine aptitude de la part des opérateurs qui doivent s'assurer que le verrouillage est complet.

Afin d'offrir une facilité de montage, il a été proposé des éclisses pouvant prendre une position prémontée avant assemblage des tronçons.

Le document EP 1 061 623 présente un exemple d'éclisse pour goulotte, l'éclisse comprenant un élément formant came coopérant avec des encoches sur un premier tronçon afin de prendre une position rentrée dans le premier tronçon et une position sortie pour l'assemblage avec un deuxième tronçon.

L'éclisse décrite dans le document FR 2 833 420 peut également prendre une position prémontée par pivotement d'un fil d'un tronçon de chemins de câbles en treillis dans une encoche de l'éclisse.

Par ailleurs, afin de pouvoir stocker et transporter des chemins de câbles plus facilement, il a été proposé la mise en place de tronçons de chemins de câbles coulissant l'un sur l'autre de façon à prendre une position pliée plus compacte avant l'installation. De tels chemins de câbles nécessitent notamment de devoir être verrouillés aussi bien en position pliée qu'en position déployée, et de passer de l'une à l'autre des positions de manière simple et rapide.

C'est pourquoi les méthodes précédemment décrites se révèlent inadaptées aux chemins de câbles télescopiques.

Le document EP 1 257 030 de la demanderesse décrit un exemple de chemin de câbles télescopique. Le document FR 2 848 350, également au nom de la demanderesse, propose un nouveau système d'assemblage de tronçons de chemins de câbles télescopiques, utilisant des ergots sur un tronçon mâle coopérant avec des lumières placées sur le tronçon femelle, afin de proposer à la fois une position d'éclissage et une position de verrouillage.

Les documents DE 20 2008 009852 et DE 198 41 643 décrivent des systèmes de verrouillage de deux tronçons de chemin de câbles.

Ces solutions, bien qu'apportant de nombreux avantages, n'offrent cependant pas entière satisfaction, tant vis-à-vis de la facilité de la manipulation que de la qualité du verrouillage.

L'invention vise notamment à apporter une solution aux divers problèmes mentionnés ci-dessus.

Un premier objet de l'invention est de proposer un système de verrouillage pour tronçons de chemins de câbles télescopiques.

Un second objet de l'invention est de proposer un système de verrouillage pour tronçons de chemins de câbles en tôle pliée et perforées.

Un troisième objet de l'invention est de proposer un système de verrouillage pour tronçons de chemins de câbles télescopiques permettant de verrouiller les tronçons dans une position pliée et dans une position déployée.

Un quatrième objet de l'invention est de proposer un chemin de câbles facilement et rapidement déployé et verrouillé par un opérateur.

À cet effet, l'invention propose en premier lieu un système de verrouillage de deux tronçons de chemin de câbles, le système comportant l'ensemble des caractéristiques de la revendication 1. Selon le mode de réalisation préférée, la deuxième section de la lumière est trapézoïdale, le bord inférieur se rapprochant de l'axe de référence en s'éloignant de la première section, offrant un verrouillage progressif de l'agrafe dans la lumière.

La lumière des moyens femelles présente alors une dimension longitudinale supérieure ou égale à la longueur Lₘ des moyens mâles, de sorte que lorsque l'agrafe est au fond de la deuxième section de la lumière, la lamelle est dans la lumière.

Suivant un deuxième aspect, l'invention propose un chemin de câbles comportant au moins deux tronçons télescopiques, un premier tronçon, de dimensions supérieures à un deuxième tronçon, glissant sur le deuxième tronçon, le chemin de câbles pouvant prendre deux positions :
- une position pliée dans laquelle les tronçons sont superposés,
- une position déployée dans laquelle les tronçons sont dans l'alignement l'un de l'autre,
le chemin de câbles comprenant en outre un système de verrouillage tel que décrit ci-dessus, dans lequel les moyens mâles sont portés par le premier tronçon et les moyens femelles sont portés par le deuxième tronçon.

Le chemin de câbles peut alors facilement passer de la position plié à la position déployée, le blocage des deux tronçons se faisant naturellement lors du glissement des deux tronçons. Le chemin de câbles forme ainsi un système télescopique pratique et facile à manipuler.

Avantageusement, lorsque le chemin de câbles est en position déployée, l'agrafe est dans la deuxième section de la lumière des moyens femelles et, lorsque le chemin de câbles est en position pliée, les moyens mâles sont placés dans la fenêtre des moyens femelles.

Ainsi le chemin de câbles est bloqué aussi bien en position pliée qu'en position déployée.

De préférence, le deuxième tronçon comprend des ailes élastiques déformables vers l'intérieur du chemin de câbles. Ainsi, lorsque les tronçons glissent l'un par rapport à l'autre, les ailes du deuxième tronçon se plient vers l'intérieur sous la poussée des moyens mâles.

D'autres objets et avantages de l'invention apparaîtront à la lumière de la description faite ci-après en référence aux dessins annexés dans lesquels :

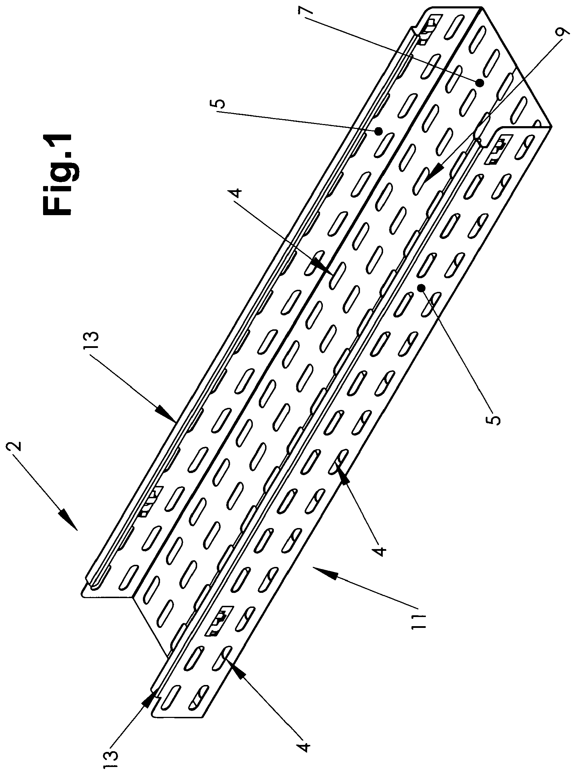

- la figure 1 est une vue en perspective d'un tronçon de chemins de câbles en tôle pliée muni de moyens mâles de verrouillage ;

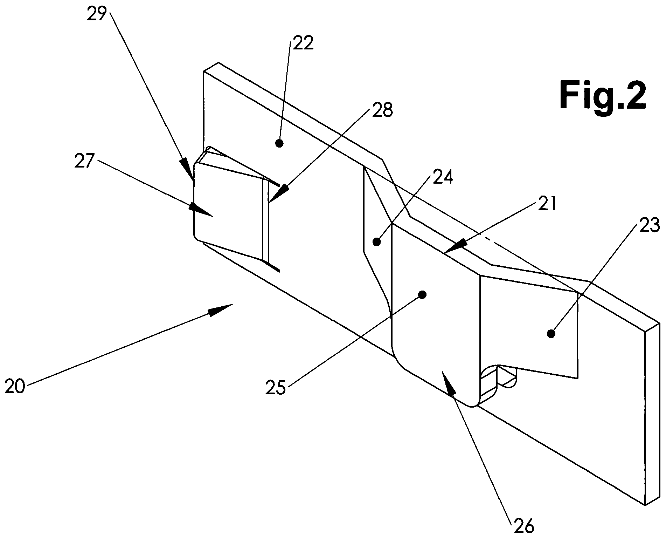

- la figure 2 est une vue en perspective des moyens mâles de verrouillage ;

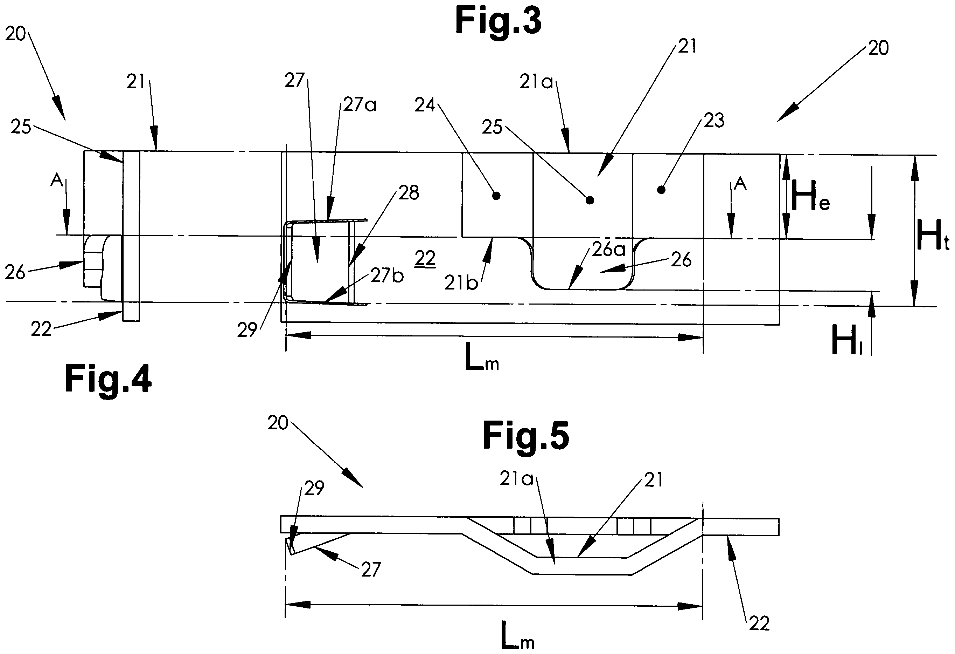

- la figure 3 est une vue de face des moyens de la figure 2 ;
- la figure 4 est une vue de côté des moyens de la figure 2 ;
- la figure 5 est une vue de dessus des moyens de la figure 2 ;

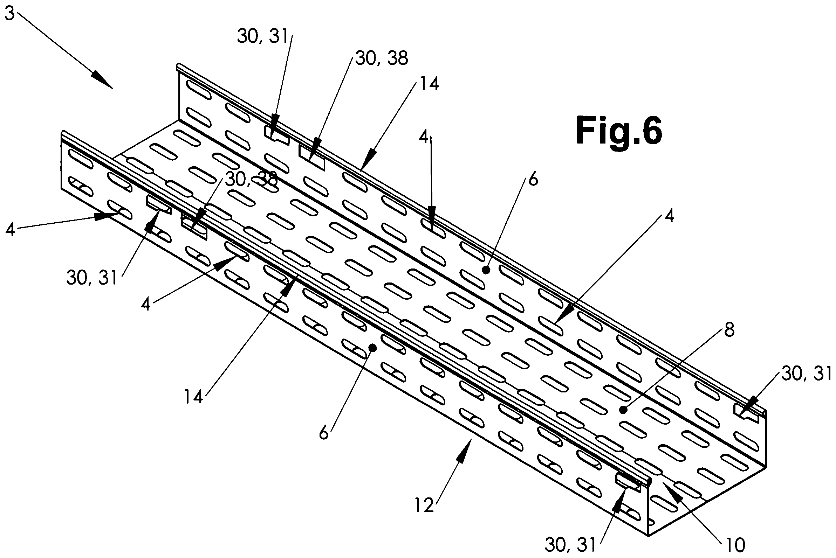

- la figure 6 est une vue en perspective d'un tronçon de chemins de câbles en tôle pliée muni de moyens femelles de verrouillage ;

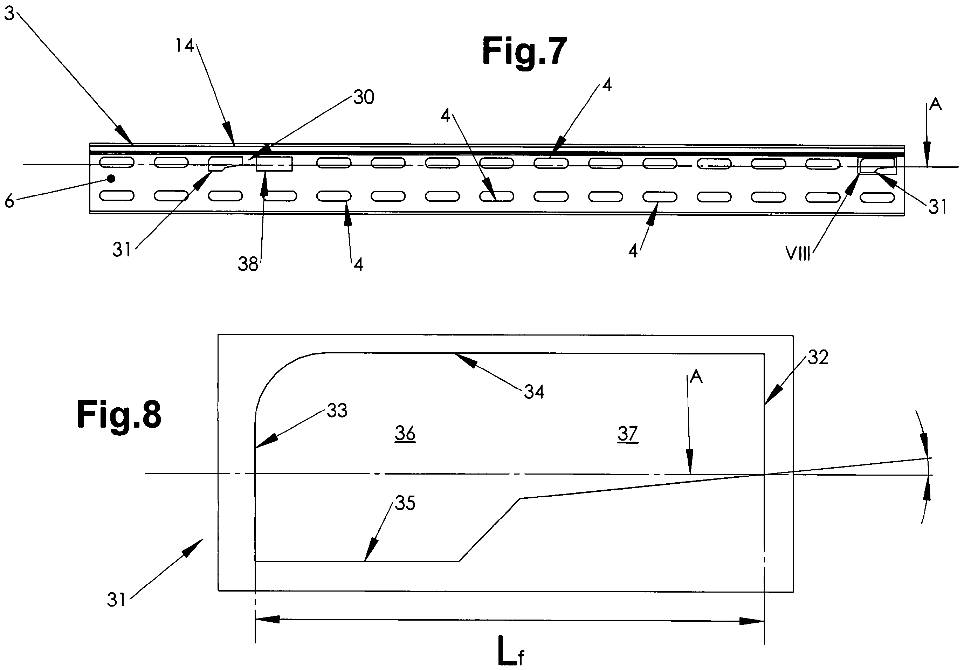

- la figure 7 est une vue de profil du tronçon de la figure 6 ;
- la figure 8 est une vue de détail de la figure 7 montrant un moyen femelle ;
- la figure 9 est une vue de face des deux tronçons assemblés ;
- la figure 10 est une vue de détail de la figure 9 ;
- la figure 11 est une vue en perspective des tronçons des figures 1 et 6 assemblés dans une position pliée ;
- la figure 12 est une vue de côté des tronçons de la figure 11 ;
- la figure 13 est une vue de détail de la figure 12 ;
- la figure 14 est une vue de côté des tronçons dans une position intermédiaire ;
- la figure 15 est une vue de détail de la figure 14 ;
- la figure 16 est une vue en perspective des tronçons dans une position déployée ;
- la figure 17 est une vue de côté des tronçons de la figure 16 ;
- la figure 18 est une vue de détail de la figure 17.

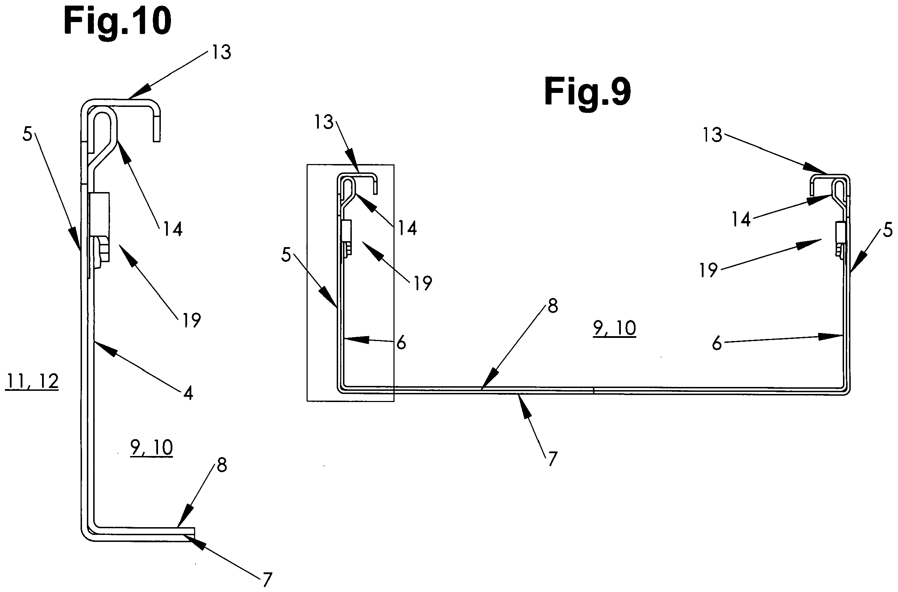

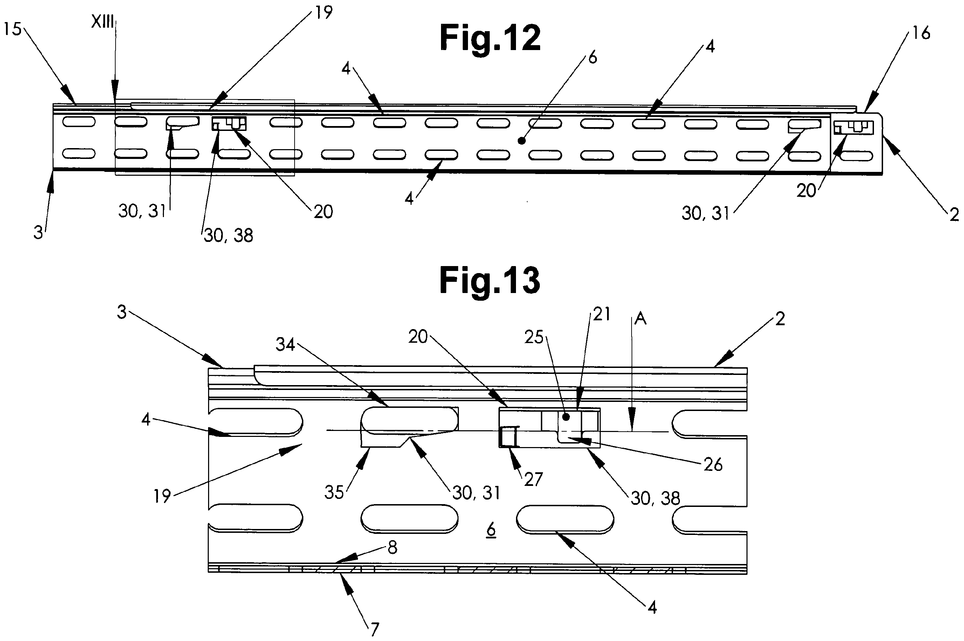

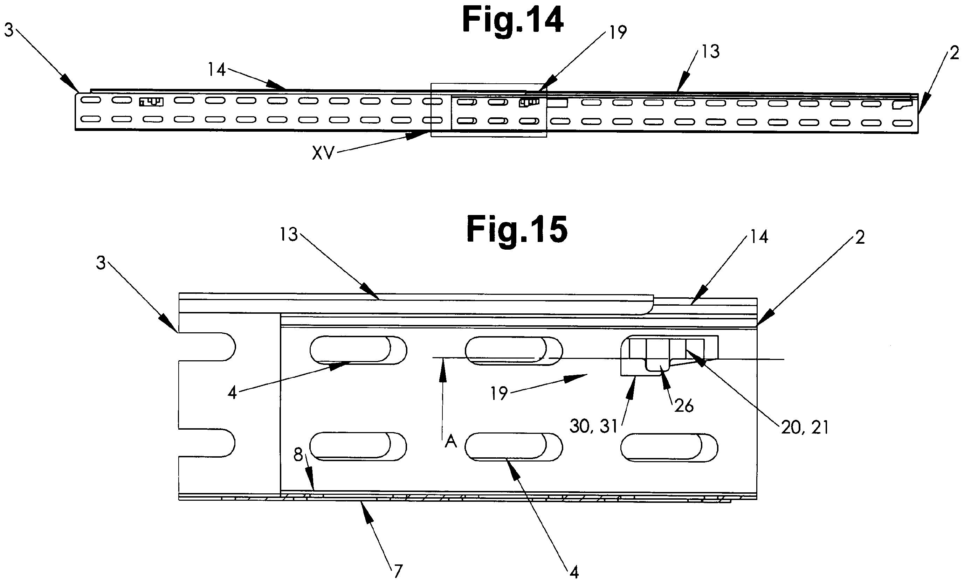

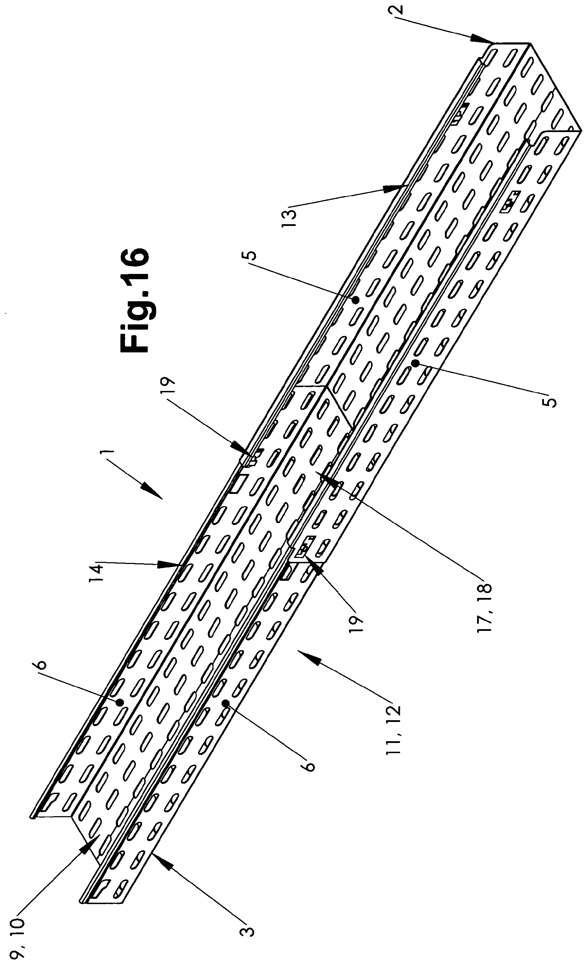

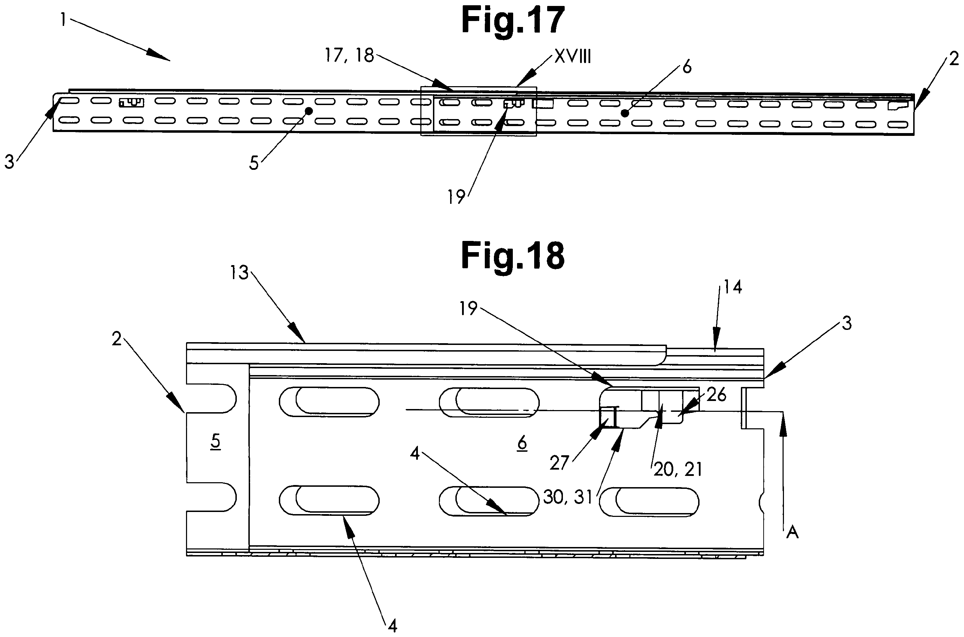

Sur les figures 9 à 18, il est représenté un chemin 1 de câbles comprenant deux tronçons 2, 3 assemblés. Chaque tronçon 2, 3 est formé à partir d'une plaque de tôle métallique pliée et découpée, définissant une direction générale longitudinale. Des ouvertures 4 oblongues longitudinales sont en outre régulièrement réparties sur la plaque, permettant par exemple d'ajouter des accessoires dans le chemin 1 de câbles.

Les tronçons 2, 3 sont réalisés par exemple en acier, en inox, en aluminium ou encore en plastique. Un traitement, tel que la galvanisation, le zingage, le zingage bichromaté, un revêtement plastique ou époxy, peut être appliqué aux tronçons 2, 3.

Chaque tronçon 2, 3 comprend deux ailes 5, 6 sensiblement parallèles entre elles et perpendiculaires à un fond 7, 8 de manière à former une section en U, définissant un côté 9, 10 intérieur et un côté 11, 12 extérieur pour chaque tronçon 2, 3.

Les deux tronçons 2, 3 sont coulissants l'un sur l'autre. A cet effet, un premier 2 tronçon présente des dimensions supérieures à celle d'un deuxième 3 tronçon. Ainsi, la largeur entre les deux ailes 5 du premier tronçon 2 est supérieure à celle entre les ailes 6 du deuxième tronçon 3. De préférence, la largeur intérieure entre les ailes 5 du premier tronçon 2 est sensiblement égale à la largeur extérieure entre les ailes 6 du deuxième tronçon 3. Par ailleurs, les portions extrêmes des ailes 5, 6 du premier tronçon 2 et du deuxième tronçon 3 sont roulées : par exemple, ainsi qu'illustré sur les figures, la portion extrême 13 supérieure de chaque aile du premier tronçon 2 est repliée deux fois à environ 90°, vers l'intérieur du tronçon 2, de façon à former une gouttière. La portion 14 extrême de chaque aile 6 du deuxième tronçon 3 est également repliée, mais vers l'extérieur du deuxième tronçon 3, de façon à former une boucle.

Ainsi, le deuxième tronçon 3 est glissé dans le premier tronçon 2 de façon à ce que la boucle 14 extrême de chaque aile 6 du deuxième tronçon 3 glisse dans une gouttière 13 d'une aile 5 du premier tronçon 2.

Avantageusement, les ailes 5, 6 ainsi roulées permettent d'éviter les risques de blessures pour un opérateur que pourraient provoquer des arêtes vives.

Avantageusement, la boucle 14 d'une aile 6 du deuxième tronçon 3 ne dépasse pas au-delà de ladite aile 6 à l'extérieur du deuxième tronçon 3, de façon à ce que la surface extérieure de chaque aile 6 du deuxième tronçon 3 soit en contact avec la surface intérieure d'une aile 5 du premier tronçon 2.

Ainsi qu'il sera vu plus loin, les ailes 6 du deuxième tronçon 3 présentent une élasticité leur permettant de se replier l'une vers l'autre, vers l'intérieur du tronçon. En variante, ce sont les ailes 5 du premier tronçon 2 qui sont élastiques, pour se plier vers l'extérieur du premier tronçon 2.

Par élasticité, on entend ici la capacité d'un matériau à se déformer de manière réversible en reprenant sa position initiale lorsqu'il est écarté de celle-ci sous l'action d'une contrainte.

Le chemin 1 de câbles peut alors prendre deux positions : une position repliée dans laquelle les deux tronçons 2, 3 sont sensiblement superposés, une première portion 15, 16 extrême de chaque tronçon 2, 3 restant cependant libre, ainsi que nous le verrons plus loin, et une position déployée dans laquelle les deux tronçons 2, 3 sont sensiblement dans l'alignement l'un de l'autre, les deuxièmes portions 17, 18 extrêmes, opposées aux premières 15, 16, de chaque tronçon 2, 3 restant superposées.

Le chemin 1 de câbles comprend de plus un système 19 de verrouillage de la position, pour lequel on définit un axe A de référence s'étendant suivant une direction longitudinale.

A cet effet, le système 19 de verrouillage comprend des moyens 20 dits mâles de verrouillage de la position du chemin 1 de câbles.

Ces moyens 20 mâles comprennent notamment une agrafe 21 placée sur un plan 22 de référence passant par l'axe A de référence.

L'agrafe 21 est définie entre un bord 21 a supérieur et un bord 21b inférieur, le bord 21b inférieur étant confondu avec l'axe de référence A. L'agrafe 21 comprend deux sections 23, 24 inclinées suivant la direction longitudinale, s'écartant du plan 22 de référence et se rejoignant dans une section 25 plane sensiblement parallèle au plan 22 de référence, de sorte que cette section 25 plane se retrouve à distance du plan 22 de référence.

La section 25 plane de l'agrafe 21 est prolongée transversalement au-delà de l'axe A de référence, à partir du bord inférieur 21b, par une languette 26, s'étendant jusqu'à une extrémité 26a libre. La languette 26 se trouve donc également parallèle à et à distance du plan 22 de référence.

Avantageusement, la distance entre l'agrafe 21 et le plan 22 de référence est supérieure ou égale à l'épaisseur du deuxième tronçon 3.

Les moyens 20 mâles comprennent en outre une lamelle 27, définie entre un bord 27a supérieur et un bord 27b inférieur. La lamelle 27 est rattachée au plan 22 de référence suivant une première 28 extrémité, et s'étendant longitudinalement en s'écartant du plan 22 de référence, à l'opposé de l'agrafe 21, jusqu'à une deuxième extrémité 29 libre.

On définit les dimensions transversales des moyens 20 mâles de la manière suivante :
- la hauteur Hₜ des moyens 20 mâles est la plus grande des dimensions mesurées transversalement soit entre le bord 21a supérieur de l'agrafe 21 et l'extrémité 26a libre de la languette 26, soit entre le bord 21a supérieur de l'agrafe 21 et le bord 27b inférieur de la lamelle 27b ;
- la hauteur Hₑ de l'agrafe 21 est la dimension mesurée transversalement entre le bord 21a supérieur et le bord 21b inférieur de l'agrafe 21 ;
- la hauteur Hₗ de la languette 26 est la dimension mesurée transversalement entre le bord 21b inférieur de l'agrafe 21 et l'extrémité 26a libre de la languette 26.

On définit en outre la longueur Lₘ des moyens 20 mâles comme étant la plus grande dimension longitudinale mesurée entre une section 23 de l'agrafe 21 et l'extrémité 29 libre de la lamelle 27.

Le deuxième tronçon 3 comprend des moyens 30 dits femelles de verrouillage de la position du chemin 1 de câbles, ces moyens 30 femelles coopérant avec les moyens 20 mâles du premier tronçon 2.

Les moyens 30 femelles comportent une lumière 31, placée par exemple sur une aile 6 ou le fond 8 du deuxième tronçon 3. La lumière 31 est comprise longitudinalement entre deux bords 32, 33 latéraux sensiblement parallèles, la distance entre les deux bords 32, 33 latéraux, notée L_{f}, étant supérieure ou égale à la longueur Lₘ des moyens 20 mâles.

La lumière 31 est par ailleurs comprise transversalement de part et d'autre de l'axe A de référence entre un bord 34 supérieur parallèle à l'axe A de référence et à une distance de l'axe A de référence supérieure ou égale à la hauteur Hₑ de l'agrafe 21, et un bord 35 inférieur qui définit sur la lumière 31 deux sections :
- une première section 36 parallèle à l'axe A de référence, dans laquelle la distance entre le bord 34 supérieur et le bord 35 inférieur est supérieure ou égale à la hauteur Hₜ des moyens 20 mâles, et dans laquelle le bord 35 inférieur est à une distance de l'axe A de référence supérieure ou égale à la hauteur Hₗ de la languette 26 ;
- une deuxième section 37 rétrécie, dans laquelle le bord 35 inférieur est à une distance de l'axe A de référence inférieure à la hauteur Hₗ de la languette 26.

Avantageusement, ainsi qu'on le verra plus loin, dans la deuxième section 37 de la lumière 31, le bord 35 inférieur est incliné de façon à rejoindre l'axe A de référence au fur et à mesure qu'il s'éloigne de la première section 36.

Les moyens 30 femelles comprennent en outre une fenêtre 38 de forme droite, par exemple rectangulaire, alignée avec la lumière 31 sur l'axe A de référence.

Un exemple de mise en oeuvre du système 19 de verrouillage est décrit ci-dessous. Dans cet exemple, on comprendra que la direction longitudinale des tronçons 2, 3 est confondue avec celle des moyens 20 mâles et des moyens 30 femelles.

Des moyens 20 mâles sont placés par exemple sur une aile 5 du premier tronçon 2, le plan 22 de référence étant alors confondu avec la paroi intérieure de l'aile 5, et l'agrafe 21 et la lamelle 27 étant en saillie vers l'intérieur du premier tronçon 2. Des moyens 30 femelles sont par ailleurs placés sur une aile 6 du deuxième tronçon 3, ladite aile 6 du deuxième tronçon 3 étant en contact avec ladite aile 5 du premier tronçon 2.

Dans la position pliée, les moyens 20 mâles du système de verrouillage sont placés dans la fenêtre 38 des moyens 30 femelles, les ailes 6 du deuxième tronçon 3 étant sensiblement en contact avec les ailes 5 du premier tronçon 2, de sorte que des glissements relatifs accidentels de deux tronçons 2, 3 sont empêchés par la butée des bords de la fenêtre 38 sur l'agrafe 21 et la lamelle 27. Les moyens 20 mâles sont alors en saillie au-delà de l'aile 6 à l'intérieur du deuxième tronçon 3.

La première portion 15, 16 libre des tronçons 2, 3 sert de prise pour tirer et faire glisser les deux tronçons 2, 3.

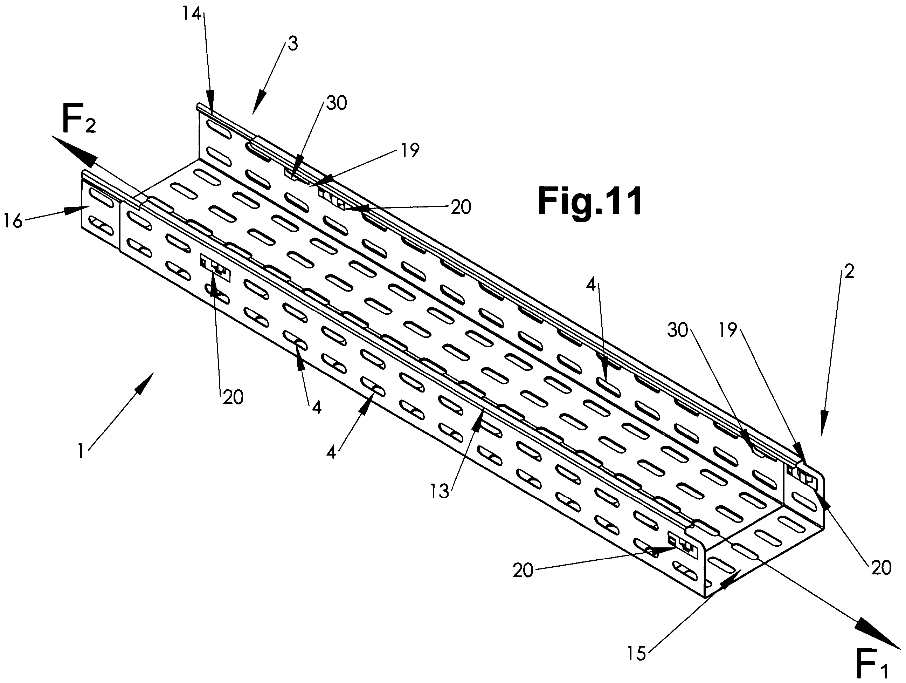

Un opérateur peut ainsi tirer par exemple sur le premier tronçon 2 suivant la flèche F1 ou sur le deuxième tronçon 3 suivant la flèche F2 (figure 11).

Sous l'effet de la traction, le bord de la fenêtre 38 glisse sur une section 23 inclinée de l'agrafe 21, de sorte que l'aile 6 du deuxième tronçon 3 se déforme vers l'intérieur du tronçon 3, jusqu'à ce que l'aile du deuxième tronçon 3 se retrouve en appui sur la section 25 plane de l'agrafe 21 et/ou sur l'extrémité 29 libre de la lamelle 27.

Il est ainsi possible de faire glisser les deux tronçons 2, 3 l'un sur l'autre suivant la direction longitudinale, les ailes 6 du deuxième tronçon 3 glissant sur la section 25 plane des agrafes 21 et/ou l'extrémité 29 libre de la lamelle 27.

Avantageusement, on aura pris soin de dimensionner les moyens 20 mâles de sorte qu'ils n'interfèrent pas avec les autres ouvertures 4 oblongues du deuxième tronçon 3.

Lorsque l'agrafe 21 passe dans la première section 36 de la lumière 31 des moyens 30 femelles, la hauteur Hₗ de la languette 26 étant inférieure à la distance entre le bord 35 inférieur de la lumière 31 et l'axe A de référence, les ailes 6 du deuxième tronçon 3 reviennent sensiblement contre les ailes 5 du premier tronçon 2.

En continuant à glisser les deux tronçons 2, 3, l'agrafe 21 se place dans la deuxième section 37 de la lumière 31. La distance entre le bord 35 inférieur de la lumière 31 et l'axe A de référence étant inférieure à la hauteur Hₗ de la languette 26, la languette 26 passe au moins partiellement au-dessus de l'aile 6 du deuxième tronçon 3 : l'aile 6 du deuxième tronçon 3 est alors coincée entre la languette 26 et l'aile 5 du premier tronçon 2.

Le blocage a lieu lorsque l'agrafe 21 arrive en butée contre le deuxième bord 32 latéral de la lumière 31. En effet, la languette 26 au-dessus de l'aile 6 du deuxième tronçon 3 empêche l'aile 6 du deuxième tronçon 3 de se déformer de nouveau vers l'intérieur du tronçon 3, de sorte que le glissement est arrêté.

La longueur Lₘ des moyens 20 mâles étant inférieure ou égale à la longueur L_{f} des moyens 30 femelles, lorsque le blocage se produit, la lamelle 27 se trouve alors à son tour placée dans la première section 36 de la lumière 31, et reprend la position de blocage. Ainsi, les deux tronçons 2, 3 sont bloqués dans la direction longitudinale : d'un côté par la languette 26 contre un premier bord 32 latéral de la lumière 31, empêchant l'aile 6 du deuxième tronçon 3 de se déformer, et de l'autre côté par la lamelle 27 contre le deuxième bord 33 latéral de la lumière 31.

Le bord 35 inférieur incliné de la lumière 31 assure de plus un verrouillage progressif de l'agrafe 21 dans la lumière 31, de sorte que le glissement des tronçons 2, 3 dans des directions opposées aux flèches F1 et F2 est bloqué.

En pratique, on positionnera des moyens 20 mâles sur chaque aile 5 du premier tronçon 2 et de moyens 30 femelles, c'est-à-dire une lumière 31 et une fenêtre 38, sur chaque aile 6 du deuxième tronçon 3.

On pourra en outre placer des moyens 20 mâles et 30 femelles sur les fonds 7, 8 des tronçons 2, 3.

Le système 19 ainsi formé permet d'assurer un verrouillage de deux tronçons 2, 3 de chemins 1 de câbles télescopiques aussi bien en position pliée qu'en positon déployée.

Aucun outil n'est nécessaire pour mettre en oeuvre le système 19 de verrouillage.

Pour verrouiller les deux tronçons 2, 3 en position déployée, il suffit de faire glisser un tronçon jusqu'au blocage, de sorte qu'un opérateur seul peut mettre en oeuvre le système 19.

Le système 19 de verrouillage peut être placé à chaque portion extrême 15, 16, 17, 18 des tronçons, de sorte que le système 19 peut être utilisé pour verrouiller plus de deux tronçons 2, 3.

## Revendications

1. Système (**19**) de verrouillage de deux tronçons (**2, 3**) de chemin (**1**) de câbles, le système (**19**) définissant un axe (**A**) de référence longitudinal et comprenant des premiers moyens (**20**) dits mâles de verrouillage, aptes à être portés par un premier tronçon (**2**), les moyens (**20**) mâles comportant une agrafe (**21**) de hauteur Hₑ placée sur un plan (**22**) de référence passant par l'axe (**A**) de référence, l'agrafe (**21**) étant définie entre un bord (**21a**) supérieur et un bord (**21b**) inférieur, le bord (**21b**) inférieur étant confondu avec l'axe (**A**) de référence, l'agrafe (**21**) comprenant deux sections (**23, 24**) inclinées suivant la direction longitudinale, ces deux sections (**23, 24**) s'écartant du plan (**22**) de référence et se rejoignant dans une section (**25**) plane sensiblement parallèle au plan (**22**) de référence, la section (**25**) plane étant prolongée transversalement au-delà de l'axe (**A**) de référence, à partir du bord inférieur (**21b**), par une languette (**26**) de hauteur Hₗ, s'étendant jusqu'à une extrémité (26a) libre, le système (**19**) de verrouillage comprenant de plus des moyens (**30**) dits femelles, aptes à être portés par un deuxième tronçon (**3**), les moyens (**30**) femelles comportant une lumière (**31**) comprise entre un bord (**34**) supérieur et un bord (**35**) inférieur de part et d'autre de l'axe (**A**) de référence, le bord (**34**) supérieur étant placé à une distance de l'axe (**A**) de référence supérieure ou égale à la hauteur Hₑ de l'agrafe (**21**) et le bord inférieur (35) définissant deux sections :
- une première section (**36**) dans laquelle le bord (**35**) inférieur est à une distance de l'axe (**A**) de référence supérieure ou égale à la hauteur Hₗ de la languette (**26**) ;
- une deuxième section (**37**) dans laquelle le bord (**35**) inférieur est à une distance de l'axe (**A**) de référence inférieure à la hauteur Hₗ de la languette (**26**), ces dimensions de la lumière (31) des moyens femelles (30) et de la languette (26) des moyens (20) mâles adaptés de permettre que la languette (26) des moyens (20) mâles glisse à partir de la première section (36) de la lumière (31) vers la deuxième section (37), de sorte à bloquer le deuxième tronçon contre le premier, ce système de verrouillage étant **caractérisé en ce que**
- les moyens (**20**) mâles comprennent, en outre, une lamelle (**27**) qui s'étend, en s'écartant du plan (22) de référence du même coté dudit plan (22) de référence que la section (25) plane, dans une direction longitudinale à partir d'un premier bord (**28**) sur le plan (**22**) de référence en s'écartant de ladite section (**25**) plane, jusqu'à un deuxième bord (**29**) libre à l'opposé de l'agrafe (**21**) ;
- les moyens (**30**) femelles comprennent, en outre, une fenêtre (**38**) alignée avec l'axe (**A**) de référence et de dimension transversale supérieure ou égale à la hauteur Hₜ des moyens (**20**) mâles, qui est la plus grande des dimensions mesurées transversalement soit entre le bord (21 a) supérieur de l'agrafe (21) et l'extrémité (26a) libre de la languette (26), soit entre le bord (21 a) supérieur de l'agrafe (21) et un bord (27b) inférieur de la lamelle (27).

2. Système (**19**) selon la revendication 1 dans lequel la deuxième section (**36**) de la lumière (**31**) est trapézoïdale, le bord (**35**) inférieur se rapprochant de l'axe (**A**) de référence en s'éloignant de la première section (**36**).

3. Système (**19**) selon la revendication 1 ou 2, dans lequel la lumière (**31**) des moyens (**30**) femelles présente une dimension longitudinale supérieure ou égale à la longueur Lₘ des moyens (**20**) mâles, qui est la plus grande dimension longitudinale mesurée entre une section (23, 24) de l'agrafe (21) et l'extrémité (29) libre de la lamelle (27).

4. Chemin (**1**) de câbles comportant au moins deux tronçons (**2, 3**) télescopiques, un premier tronçon (**2**), de dimensions supérieures à un deuxième tronçon (**3**), glissant sur le deuxième tronçon (**3**), le chemin (**1**) de câbles pouvant prendre deux positions :
- une position pliée dans laquelle les tronçons (**2, 3**) sont superposés,
- une position déployée dans laquelle les tronçons (**2, 3**) sont dans l'alignement l'un de l'autre,
le chemin (**1**) de câbles comprenant en outre un système (**19**) de verrouillage selon l'une de revendications 1 à 3, dans lequel les moyens (**20**) mâles sont portés par le premier tronçon (**2**) et les moyens femelles (**30**) sont portés par le deuxième tronçon (**3**).

5. Chemin (**1**) de câbles selon la revendication 4, dans lequel, en position déployée, l'agrafe (**21**) est dans la deuxième section (**37**) de la lumière (**31**) des moyens (**30**) femelles.

6. Chemin (**1**) de câbles selon la revendication 4 ou 5, comportant un système (**19**) de verrouillage selon la revendication 5, dans lequel, en position pliée, les moyens (**20**) mâles sont placés dans la fenêtre (**38**) des moyens (**30**) femelles.

7. Chemin (**1**) de câbles selon l'une des revendications 4 à 6, dans lequel le deuxième tronçon (**3**) comprend des ailes (**6**) élastiques déformables vers l'intérieur du chemin (**1**) de câbles.

## Patentansprüche

1. System (19) zum Verriegeln von zwei Abschnitten (2, 3) eines Kabelkanals (1), wobei das System (19) eine Längsreferenzachse (A) definiert und erste sogenannte männliche Verriegelungsmittel (20) aufweist, die geeignet sind, von einem ersten Abschnitt (2) getragen zu werden, wobei die männlichen Mittel (20) eine Klammer (21) der Höhe Hₑ aufweisen, die auf einer Referenzebene (22) angeordnet ist, die durch die Referenzachse (A) verläuft, wobei die Klammer (21) zwischen einem oberen Rand (21a) und einem unteren Rand (21b) definiert ist, wobei der untere Rand (21b) mit der Referenzachse (A) zusammenfällt, wobei die Klammer (21) zwei Abschnitte (23, 24) aufweist, die in der Längsrichtung geneigt sind, wobei sich diese zwei Abschnitte (23, 24) von der Referenzebene (22) entfernen und in einem ebenen Abschnitt (25), der im Wesentlichen parallel zu der Referenzebene (22) ist, treffen, wobei der ebene Abschnitt (25) quer über die Referenzachse (A) hinaus von dem unteren Rand (21b) durch eine Zunge (26) mit einer Höhe Hₗ verlängert ist, die sich bis zu einem freien Ende (26a) erstreckt, wobei das Verriegelungssystem (19) ferner sogenannte weibliche Mittel (30) aufweist, die geeignet sind, von einem zweiten Abschnitt (3) getragen zu werden, wobei die weiblichen Mittel (30) eine Öffnung (31) zwischen einem oberen Rand (34) und einem unteren Rand (35) auf beiden Seiten der Referenzachse (A) aufweisen, wobei der obere Rand (34) in einem Abstand von der Referenzachse (A) angeordnet ist, der größer als oder gleich der Höhe Hₑ der Klammer (21) ist und wobei der untere Rand (35) zwei Abschnitte definiert:
- einen ersten Abschnitt (36), bei dem der untere Rand (35) in einem Abstand von der Referenzachse (A) ist, der größer als oder gleich der Höhe Hₗ der Zunge (26) ist;
- einen zweiten Abschnitt (37), bei dem der untere Rand (35) in einem Abstand von der Referenzachse (A) ist, der geringer als die Höhe Hₗ der Zunge (26) ist,
wobei diese Abmessungen der Öffnung (31) der weiblichen Mittel (30) und der Zunge (26) der männlichen Mittel (20) geeignet sind zu ermöglichen, dass die Zunge (26) der männlichen Mittel (20) von dem ersten Abschnitt (36) der Öffnung (31) zu dem zweiten Abschnitt (37) derart gleitet, um den zweiten Abschnitt gegen den ersten zu blockieren, wobei dieses Verriegelungssystem **dadurch gekennzeichnet ist, dass**
- die männlichen Mittel (20) ferner eine Lamelle (27) aufweisen, die sich erstreckt, indem sie sich von der Referenzebene (22) auf der gleichen Seite der Referenzebene (22) wie der ebene Abschnitt (25) in einer Längsrichtung von einem ersten Rand (28) auf der Referenzebene (22) entfernt, indem sie sich von dem ebenen Abschnitt (25) bis zu einem zweiten freien Rand (29) auf der gegenüberliegenden Seite der Klammer (21) entfernt;
- die weiblichen Mittel (30) ferner ein Fenster (38) aufweisen, das mit der Referenzachse (A) ausgerichtet ist und eine Querabmessung aufweist, die größer als oder gleich der Höhe Hₜ der männlichen Mittel (20) ist, die die größte der Abmessungen ist, die sowohl zwischen dem oberen Rand (21a) der Klammer (21) und dem freien Ende (26a) der Zunge (26) als auch zwischen dem oberen Rand (21a) der Klammer (21) und einem unteren Rand (27b) der Lamelle (27) quer gemessen sind.

2. System (19) nach Anspruch 1, wobei der zweite Abschnitt (36) der Öffnung (31) trapezoidal ist, wobei sich der untere Rand (35) der Referenzachse (A) annähert, indem er sich von dem ersten Abschnitt (36) entfernt.

3. System (19) nach Anspruch 1 oder 2, wobei die Öffnung (31) der weiblichen Mittel (30) eine Längsabmessung aufweist, die größer als oder gleich der Länge Lₘ der männlichen Mittel (20) ist, die die größte Längsabmessung ist, die zwischen einem Abschnitt (23, 24) der Klammer (21) und dem freien Ende (29) der Lamelle (27) gemessen ist.

4. Kabelkanal (1), umfassend mindestens zwei teleskopische Abschnitte (2, 3), einen ersten Abschnitt (2) mit Abmessungen, die größer als ein zweiter Abschnitt (3) sind, der auf dem zweiten Abschnitt (3) gleitet, wobei der Kabelkanal (1) zwei Positionen einnehmen kann:
- eine zusammengeklappte Position, in der die Abschnitte (2, 3) überlagert sind,
- eine entfaltete Position, in der die Abschnitte (2, 3) miteinander fluchten,
wobei der Kabelkanal (1) ferner ein System (19) zum Verriegeln nach einem der Ansprüche 1 bis 3 aufweist, wobei die männlichen Mittel (20) von dem ersten Abschnitt (2) getragen werden und die weiblichen Mittel (30) von dem zweiten Abschnitt (3) getragen werden.

5. Kabelkanal (1) nach Anspruch 4, wobei die Klammer (21) in der entfalteten Position in dem zweiten Abschnitt (37) der Öffnung (31) der weiblichen Mittel (30) ist.

6. Kabelkanal (1) nach Anspruch 4 oder 5, umfassend ein System (19) zum Verriegeln nach Anspruch 5, wobei die männlichen. Mittel (20) in der zusammengeklappten Position in dem Fenster (38) der weiblichen Mittel (30) angeordnet sind.

7. Kabelkanal (1) nach einem der Ansprüche 4 bis 6, wobei der zweite Abschnitt (3) elastische Flügel (6) aufweist, die zur Innenseite des Kabelkanals (1) verformbar sind.

## Claims

1. System (19) for locking two sections (2, 3) of a cable raceway (1), the system (19) defining a longitudinal reference axis (A) and comprising first, "male" locking means (20) that can be borne by a first section (2), the male means (20) comprising an eye (21) of height Hₑ positioned on a reference plane (22) passing through the reference axis (A), the eye (21) being defined between an upper edge (21a) and a lower edge (21b), the lower edge (21b) coinciding with the reference axis (A), the eye (21) comprising two portions (23, 24) that are inclined in the longitudinal direction, wherein these two portions (23, 24) depart from the reference plane (22) and meet at a flat portion (25) that is essentially parallel to the reference plane (22), the flat portion (25) extending transversely beyond the reference axis (A), from the lower edge (21b), in the form of a tongue (26) of height Hₗ, extending as far as a free end (26a), the locking system (19) also comprising "female" means (30) that can be borne by a second section (3), the female means (30) comprising an opening (31) between an upper edge (34) and a lower edge (35) on either side of the reference axis (A), the upper edge (34) being positioned at a distance, from the reference axis (A), which is greater than or equal to the height Hₑ of the eye (21), and the lower edge (35) defining two portions:
- a first portion (36) in which the lower edge (35) is at a distance, from the reference axis (A), greater than or equal to the height Hₗ of the tongue (26);
- a second portion (37) in which the lower edge (35) is at a distance, from the reference axis (A), less than the height Hₗ of the tongue (26);
these dimensions of the opening (31) of the female means (30), and of the tongue (26) of the male means (20), being such that they allow the tongue (26) of the male means (20) to slide from the first portion (36) of the opening (31) to the second portion (37), so as to immobilize the second section with respect to the first,
this locking system being **characterized in that**
- the male means (20) further comprise a tab (27) which extends, from the reference plane (22), on the same side of said reference plane (22) as the flat portion (25), in a longitudinal direction from a first edge (28) on the reference plane (22), extending away from said flat portion (25), as far as a second, free end (29) oriented away from the eye (21);
- the female means (30) further comprise a window (38) which is aligned with the reference axis (A) and of which the transverse dimension is greater than or equal to the height Hₜ of the male means (20), this being the greatest of the dimensions measured transversely either between the upper edge (21a) of the eye (21) and the free end (26a) of the tongue (26), or between the upper edge (21a) of the eye (21) and a lower edge (27b) of the tab (27).

2. System (19) according to Claim 1, in which the second portion (36) of the opening (31) is trapezoidal, the lower edge (35) approaching the reference axis (A) while moving away from the first portion (36).

3. System (19) according to Claim 1 or 2, in which the opening (31) of the female means (30) has a longitudinal dimension that is greater than or equal to the length Lₘ of the male means (20), this being the greatest longitudinal dimension measured between a portion (23, 24) of the eye (21) and the free end (29) of the tab (27).

4. Cable raceway (1) comprising at least two telescopic sections (2, 3), a first section (2) being larger than a second section (3) and sliding over the second section (3), the cable raceway (1) being able to adopt two positions:
- a folded position in which the sections (2, 3) are superposed,
- a deployed position in which the sections (2, 3) are in alignment with one another,
the cable raceway (1) further comprising a locking system (19) according to one of Claims 1 to 3, in which the male means (20) are borne by the first section (2) and the female means (30) are borne by the second section (3).

5. Cable raceway (1) according to Claim 4, in which, in the deployed position, the eye (21) is in the second portion (37) of the opening (31) of the female means (30).

6. Cable raceway (1) according to Claim 4 or 5, comprising a locking system (19) according to Claim 5, in which, in the folded position, the male means (20) are placed in the window (38) of the female means (30).

7. Cable raceway (1) according to one of Claims 4 to 6, in which the second section (3) comprises elastic flanges (6) which can be bent towards the interior of the cable raceway (1).
